# FASCICULE DE BREVET EUROPEEN

(11) **EP 1 544 702 B1**
(45) Date de publication et mention de la délivrance du brevet: **30.01.2008**
(21) Numéro de dépôt: 04292600.6
(22) Date de dépôt: 03.11.2004
(51) Int. Cl.: G05D 1/00, B64F 5/00

(54) **Procédé et dispositif pour détecter sur un avion un dépassement de charges de dimensionnement au niveau d'une partie de structure dudit avion**
Verfahren und Vorrichtung zur Ermittlung eines Überschreitens der Belastungsgrenzen einer Flugzeugstruktur
Method and apparatus for detecting conditions in which aircraft structure load limitations are exceeded

(30) Priorité: 19.12.2003 FR 0314953
(43) Date de publication de la demande: 22.06.2005
(73) Titulaire: AIRBUS France, 31060 Toulouse (FR)
(72) Inventeur: Delaplace, Franck, 31400 Toulouse (FR); Marquier, Sylvie, 31400 Toulouse (FR); Mathieu, Gérard, 31820 Pibrac (FR); Squeglia, Gennaro, 31770 Colomiers (FR)
(74) Mandataire: Bonnetat, Christian

(56) Documents cités:
- US-A- 4 302 745
- US-A- 5 359 326
- US-A- 5 511 430
- US-A- 5 912 627

## Description

La présente invention concerne un procédé et un dispositif pour détecter sur un avion un dépassement de charges de dimensionnement au niveau d'une partie de structure dudit avion, soit directement, soit sur des éléments agencés sur ladite partie de structure.

Par charges de dimensionnement, on entend, dans le cadre de la présente invention, les charges maximales que peuvent supporter les parties de structure prises en compte sans qu'il y ait apparition de déformations permanentes.

Dans un but évident de sécurité, une inspection desdites parties de structure de l'avion, ainsi que la réparation d'éventuelles détériorations, doivent être effectuées, dès qu'il y a dépassement desdites charges de dimensionnement.

Une telle inspection est généralement déclenchée à la suite de la génération par un calculateur de détection d'incident, par exemple du type FWC ("Flight Warning Computer" en anglais, c'est-à-dire "calculateur d'alarme de vol" en français), d'une alarme de dépassement de vitesse ("overspeed warning" en anglais)

En général, une telle alarme est engendrée lorsqu'un dépassement de plus de quatre noeuds d'une vitesse (Mach) maximale autorisée dépendant de la configuration actuelle de l'avion, est détecté.

Les différentes vitesses (Mach) maximales sont déterminées grâce à des modèles de charge spécifiques à chaque zone de l'avion, de manière à ce que les éléments constitutifs de l'avion ne subissent pas de charge structurale de nature à les endommager.

Un tel dépassement de vitesse (Mach) maximale peut se produire lors de manoeuvres inhabituelles, lors de la rencontre de turbulences importantes ou lors d'actions erronées de la part du pilote.

L'activation de cette alarme oblige la compagnie aérienne, conformément au manuel de maintenance, à effectuer une visite de maintenance de l'avion. Cette opération vise à vérifier la bonne tenue de la structure de l'avion aux charges rencontrées lors de l'excursion en vitesse (Mach) au-delà du domaine de vol.

Cette visite consiste à contrôler de façon visuelle que des criques/fissures ne se sont pas développées et/ou que des éléments structuraux ou attaches ne se sont pas déformés et à vérifier que les différents systèmes potentiellement touchés fonctionnent encore de façon normale.

De telles visites de maintenance immobilisent donc l'avion au sol, ce qui pénalise bien entendu la compagnie aérienne.

De plus, des informations statistiques provenant des compagnies aériennes font état d'une fréquence d'occurrence relativement importante de dépassement de vitesse. En fait, pour gagner des rotations, les compagnies aériennes demandent souvent à leurs pilotes de voler à des vitesses proches des vitesses maximales. En conséquence, une simple rafale de vent ou turbulence déclenche l'alarme, ce qui oblige alors la compagnie aérienne à effectuer la visite de maintenance telle que décrite dans le manuel de maintenance de l'avion.

Or, il apparaît que, dans une très grande majorité de cas, aucun dommage au niveau de la structure de l'avion de type criques, fissures, ... n'a été observé. Ainsi, il apparaît que le critère obligeant ou non à réaliser une visite de maintenance suite à une alarme de dépassement de vitesse du type précité, est excessif et mal adapté au besoin.

Par ailleurs, les directives d'homologation dans le domaine aéronautique (par exemple FAR25, chapitre G, §25.1501-§25.1533) prévoient que les limites structurelles et aérodynamiques dans lesquelles un avion peut opérer soient établies. Ces limites sont affichées dans un diagramme de limites opérationnelles, diagramme qui est généralement référencé comme un diagramme v-n (avec V la vitesse en abscisse, et n le facteur de charge en ordonnée) ou comme une enveloppe de vol v-n. Toutefois, ces directives d'homologation ne prévoient pas notamment :
- d'être soumises à un fonctionnement automatique et répétitif sur un aéronef ; et
- d'être mises en oeuvre lors du fonctionnement de l'aéronef, pour détecter un dépassement de charges de dimensionnement.

Par ailleurs, par le document EP-0 657 723, on connaît un procédé pour détecter un dépassement de charges de dimensionnement d'un aéronef, en particulier d'un avion de transport civil, lors d'un atterrissage. Ce procédé est remarquable en ce que:
- dans une étape préliminaire :
   ■ on définit des critères de charge mesurables sur l'aéronef et représentatifs des charges effectives auxquelles est soumis l'aéronef ; et
   ■ on détermine des lois d'évolution des valeurs admissibles de ces critères de charge, en fonction de paramètres d'entrée mesurables sur l'aéronef ; et
- au moment de l'atterrissage :
   ■ on mesure les valeurs desdits paramètres d'entrée et desdits critères de charge ;
   ■ on calcule, à partir desdites lois d'évolution et desdites valeurs mesurées des paramètres d'entrée, les valeurs admissibles desdits critères de charge ;
   ■ on compare, pour chacun desdits critères de charge, la valeur effective mesurée à la valeur admissible calculée ; et
   ■ à partir du résultat des différentes comparaisons, on détermine si une inspection structurale doit être effectuée.

Ainsi, on obtient une surveillance de la structure de l'aéronef basée sur une évaluation objective du niveau de charge. En effet, cette surveillance est fondée sur la comparaison des valeurs réelles mesurées-au moment de l'impact et des valeurs admissibles calculées, desdits critères de charges. Ces critères de charge sont représentatifs des charges effectives auxquelles est soumis l'aéronef et peuvent correspondre, notamment, à l'accélération verticale et à la vitesse verticale. De plus, lesdites valeurs admissibles sont calculées à partir de paramètres d'entrée-mesurés à l'atterrissage.

Ce procédé connu permet donc de déterminer uniquement un dépassement de charges de dimensionnement ayant lieu lors d'un atterrissage de l'aéronef.

La présente invention a pour objet de remédier aux inconvénients précités.

Elle concerne un procédé pour détecter sur un avion, de façon -particulièrement efficace et fiable, tout dépassement de charges de dimensionnement au niveau d'une partie de structure (à savoir sur la partie de structure elle-même et/ou sur des éléments portés par cette dernière) dudit avion, tout en évitant des inspections structurales visiblement non justifiées d'un point de vue technique.

A cet effet, selon l'invention, ledit procédé selon lequel on réalise de façon répétitive et automatique les étapes suivantes :
- a) on mesure une vitesse effective de l'avion ;
- b) on réalise une première comparaison, en comparant cette vitesse effective mesurée à au moins une valeur de vitesse ;
- on mesure-un facteur de charge vertical de l'avion ; et
- on réalise une seconde comparaison, en comparant ledit facteur de charge vertical mesuré à au moins une valeur de facteur de charge vertical ; et
- c) on détermine si une inspection structurale doit être effectuée au niveau de ladite partie de structure, en- tenant compte au moins des résultats de ladite- première comparaison et de ladite seconde comparaison,
est remarquable en ce qu'à l'étape b), on compare ledit facteur de charge vertical mesuré à des- premier et second- domaines de facteur de charge vertical, en ce qu'à l'étape b), on détermine des première et seconde vitesses maximales, à partir d'une vitesse qui dépend de la configuration de vol actuelle de l'avion, et on compare ladite vitesse effective mesurée à ces première et seconde vitesses maximales, et en ce qu'à-l'étape c), on conclut qu'une inspection structurale doit être effectuée, lorsque l'une des trois conditions suivantes est réalisée :
- ladite vitesse effective mesurée est inférieure à ladite première vitesse maximale, et ledit facteur de charge vertical mesuré est hors dudit premier domaine qui est formé par des valeurs limites supérieure et inférieure prédéterminées qui dépendent de la configuration de -vol actuelle de l'avion;
- ladite vitesse effective mesurée est comprise entre lesdites première et seconde vitesses maximales, et ledit facteur de charge mesuré est hors dudit second domaine qui présente des limites supérieure et inférieure qui varient linéairement en fonction de la vitesse, ladite limite supérieure variant de ladite valeur limite supérieure ladite première vitesse maximale jusqu'à une première valeur prédéterminée à ladite seconde vitesse maximale, et ladite limite inférieure variant de ladite valeur limite inférieure à ladite première vitesse maximale jusqu'à une seconde valeur prédéterminée à ladite seconde vitesse maximale ; et
- ladite vitesse effective mesurée est supérieure à ladite seconde vitesse maximale.

Ainsi, grâce à la surveillance du facteur de charge vertical et à la prise en compte de façon combinée (comme précisé ci-dessous) de deux types de dépassement (dépassement de la vitesse maximale et dépassement du facteur de charge vertical maximal), on obtient une évaluation affinée du niveau de charge auquel ont été soumis la partie de structure et/ou les éléments qu'elle porte. Ceci permet de réduire de façon significative le nombre d'inspections (ou visites de maintenance) à déclencher et donc les inconvénients qui en découlent.

En outre, concernant les directives d'homologation précitées, ces dernières ne prévoient pas :
- d'être soumises à un fonctionnement automatique et répétitif sur l'aéronef ;
- d'être mises en oeuvre lors du fonctionnement de l'aéronef, pour détecter un dépassement de charges de dimensionnement ;
- de prendre en compte une combinaison particulière de la vitesse et du facteur de charge ;
- d'utiliser les domaines de vitesse et de facteur de charge précités ; et
- de réaliser les comparaisons précitées.

De plus, le procédé divulgué par le document EP-0 657 723 précité ne prévoit pas de comparer des valeurs mesurées à des domaines qui dépendent, notamment, de la configuration de vol de l'aéronef. Ce document connu enseigne, en effet, de comparer des valeurs mesurées à des valeurs admissibles qui sont calculées à partir de paramètres mesurés à l'atterrissage. Il permet donc uniquement de détecter un dépassement de charges de dimensionnement dû à un atterrissage difficile, mais il n'est pas en mesure de détecter un dépassement de charges de dimensionnement dû à un problème en vol.

Premièrement, avantageusement, lorsque des éléments sustentateurs de la voilure de l'avion sont déployés, lesdites première et seconde vitesses maximales dépendent d'une vitesse maximale avec des éléments sustentateurs déployés VFE.

Dans ce cas, de préférence, ladite première vitesse maximale VF vérifie la relation VF = VFE + k, k étant une valeur dépendant de la position desdits éléments sustentateurs, et ladite seconde vitesse maximale Vmax1 vérifie la relation Vmax1 = VF+V1, V1 étant une valeur de vitesse prédéterminée.

Deuxièmement, avantageusement, lorsque l'avion est en configuration de croisière, lesdites première et seconde vitesses maximales dépendent d'une vitesse maximale d'utilisation VMO.

Dans ce cas, de préférence, ladite première vitesse maximale correspond à ladite vitesse maximale d'utilisation VMO, et ladite seconde vitesse maximale Vmax2 vérifie la relation Vmax2 = VMO + V2, V2 étant une valeur de vitesse prédéterminée.

Troisièmement, avantageusement, lorsque le train d'atterrissage principal de l'avion est sorti, lesdites première et seconde vitesses maximales dépendent d'une vitesse maximale avec train d'atterrissage sorti.

Dans un mode de réalisation particulier, à l'étape b), on compare ladite vitesse effective mesurée à une vitesse maximale auxiliaire, et à l'étape c), on émet un avertissement de dépassement de vitesse maximale, lorsque ladite vitesse effective mesurée est supérieure à ladite vitesse maximale auxiliaire. Cet avertissement permet de prévenir l'équipage que l'avion est sorti du domaine de vol autorisé, de sorte qu'il puisse agir pour rectifier la vitesse de l'avion. Néanmoins, conformément à la présente invention, cette seule condition n'oblige pas la compagnie à effectuer la visite de maintenance, au contraire des solutions usuelles précisées ci-dessus.

En outre, de façon avantageuse :
- ladite vitesse maximale dépend également d'au moins une caractéristique particulière (porte ouverte, emport sous voilure, répartition de carburant, ...) de l'avion ; et/ou
- ledit facteur de charge vertical mesuré (ou tout autre paramètre considéré et mesuré) est filtré avant d'être comparé à au moins une valeur limite ; et/ou
- à l'étape c), le résultat d'une comparaison doit être confirmé pendant une durée prédéterminée avant d'être pris en compte ; et/ou
- au moins l'un des seuils (vitesse maximale, valeur limite, ...) utilisés pour une comparaison dépend de parties de structure de l'avion prises en compte (voilure, becs, ailerons, spoilers, volets, ...).

Dans un mode de réalisation particulier, de façon répétitive et automatique :
- avant ladite étape c) :
   - on mesure la valeur d'au moins un paramètre particulier supplémentaire ; et
   - on réalise une comparaison supplémentaire, en comparant ladite valeur mesurée à au moins une valeur limite dudit paramètre particulier ; et
- à ladite étape c), on détermine si une inspection structurale doit être effectuée au niveau de ladite partie de structure, en tenant également compte du résultat de ladite comparaison supplémentaire.

Ainsi, dans ce mode de réalisation particulier, on prend également en compte un (ou plusieurs) paramètre(s) supplémentaire(s).

De préférence, on prend en compte, comme paramètre particulier supplémentaire, au moins l'un des paramètres suivants :
- la masse de l'avion ;
- le centrage de l'avion ;
- la pression dynamique ; et
- au moins une information particulière (par exemple une information relative à une jauge de contrainte).

La présente invention concerne également un dispositif pour détecter sur un avion un dépassement de charges de dimensionnement au niveau d'une partie de structure dudit avion.

Selon l'invention, ledit dispositif du type comportant :
- des premiers moyens pour mesurer une vitesse effective de l'avion ;
- des deuxièmes moyens pour réaliser une première comparaison, en comparant cette vitesse effective mesurée à au moins une valeur de vitesse ;
- des quatrièmes moyens pour mesurer un facteur de charge vertical de l'avion ;
- des cinquièmes moyens pour réaliser une seconde comparaison, en comparant ledit facteur de charge vertical mesuré à au moins une valeur de facteur de charge vertical ; et
- des troisièmes moyens qui sont formés pour déterminer si une inspection structurale doit être effectuée au niveau de ladite partie de structure, en tenant compte au moins des résultats de ladite première comparaison et de ladite seconde comparaison,
est remarquable en ce que :
- lesdites deuxièmes moyens sont formés de manière à comparer ledit facteur de charge vertical mesuré à des premier et second domaines de facteur de charge vertical ;
- lesdits cinquièmes moyens sont formés de manière à déterminer des première et seconde vitesses maximales, à partir d'une vitesse qui dépend de la configuration de vol actuelle de l'avion, et à comparer ladite vitesse effective -mesurée à ces première et seconde vitesses maximales; et
- lesdits troisièmes moyens sont formés de manière à conclure qu'une inspection structurale doit être effectuée, lorsque l'une des trois conditions-suivantes est réalisée:
   ■ ladite vitesse effective mesurée est inférieure à ladite première vitesse maximale et ledit facteur de charge vertical mesuré est hors dudit premier domaine qui est formé par des valeurs limites supérieure et inférieure prédéterminées qui dépendent de la configuration de vol actuelle de l'avion ;
   ■ ladite vitesse effective mesurée est comprise entre lesdites première et-seconde vitesses maximales et ledit facteur de charge mesurée est hors dudit second domaine qui présente des limites supérieure et
   ■ inférieure qui varient linéairement en fonction de la vitesse, ladite limite supérieure variant de ladite valeur limite supérieure à ladite première vitesse maximale jusqu'à une première valeur prédéterminée à ladite seconde vitesse maximale et ladite limite inférieure variant de ladite valeur limite inférieure à ladite première vitesse maximale jusqu'à une seconde valeur prédéterminée à ladite seconde vitesse maximale ; et
   ■ ladite vitesse effective mesurée est supérieure à ladite seconde vitesse maximale.

Dans un mode de réalisation particulier, ledit dispositif comporte de plus des sixièmes moyens, par exemple des moyens d'affichage et/ou des moyens d'impression, pour indiquer à un opérateur, le cas échéant, qu'une inspection structurale doit être effectuée.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 et 3 sont des graphiques permettant de bien expliquer l'objet de la présente invention pour deux configurations de vol différentes de l'avion.

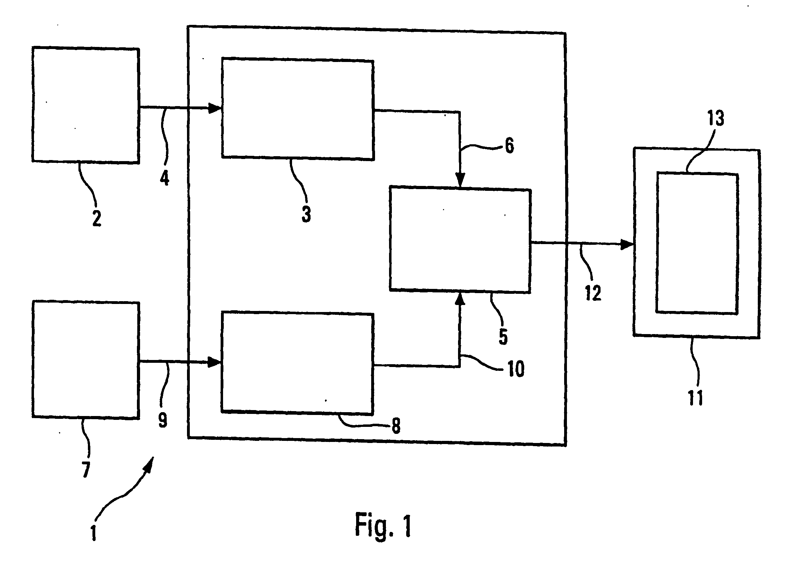

Le dispositif 1 conforme à l'invention et représenté schématiquement sur la figure 1 est destiné à détecter sur un avion non représenté, notamment un avion de transport militaire, un dépassement de charges de dimensionnement au niveau d'une partie de structure dudit avion, par exemple la voilure [c'est-à-dire soit directement sur les ailes de l'avion qui forment ladite voilure, soit sur des éléments (becs, volets, ailerons, spoilers, ...) qui sont agencés sur lesdites ailes].

Pour ce faire, ledit dispositif 1 est du type comportant :
- des moyens 2 usuels pour mesurer une vitesse effective Veff de l'avion ;
- des moyens 3 qui sont reliés par une liaison 4 aux moyens 2, pour réaliser une première comparaison, en comparant cette vitesse effective Veff mesurée à au moins une vitesse maximale relative au moins à la configuration de vol actuelle de l'avion. Ladite vitesse maximale peut également dépendre d'au moins une caractéristique particulière (porte ouverte, emport sous voilure, répartition de carburant, ...) de l'avion ; et
- des moyens 5 qui sont reliés par une liaison 6 aux moyens 3, pour déterminer si une inspection structurale doit être effectuée au niveau de ladite partie de structure, au moins à partir du résultat de ladite première comparaison.

Selon l'invention :
- ledit dispositif 1 comporte de plus :
   - des moyens 7 pour mesurer un facteur de charge vertical (effectif) Nzeff de l'avion ; et
   - des moyens 8 qui sont reliés par une liaison 9 aux moyens 7, pour réaliser une seconde comparaison, en comparant ledit facteur de charge vertical Nzeff mesuré (et de préférence préalablement filtré) à au moins une valeur limite de facteur de charge vertical ; et
- lesdits moyens 5 qui sont reliés par une liaison 10 aux moyens 8, sont formés pour déterminer si une inspection structurale doit être effectuée au niveau de ladite partie de structure, à partir des résultats desdites première et seconde comparaisons, reçus desdits moyens 3 et 8. De préférence, le résultat d'une comparaison doit être confirmé pendant une durée prédéterminée (par exemple 300 ms) avant d'être pris en compte.

Ledit dispositif 1 comporte également des moyens 11 qui sont reliés par une liaison 12 auxdits moyens 5 et qui sont destinés à indiquer à un opérateur, par exemple un opérateur de maintenance ou un pilote de l'avion, le cas échéant, qu'une inspection structurale doit être effectuée. Ces moyens 11 peuvent notamment comporter des moyens d'affichage permettant d'afficher sur un écran de visualisation 13 les indications précitées. Ils peuvent également comporter des moyens d'impression et/ou des moyens d'alarme, par exemple, de type sonore et/ou de type visuel.

Dans un mode de réalisation particulier, lesdits moyens 8 comparent ledit facteur de charge vertical Nzeff mesuré à une valeur limite supérieure Nzsup1, Nzsup2 (qui dépendent de la masse de l'avion) et à une valeur limite inférieure Nzinf1, Nzinf2, lesdits moyens 3 comparent ladite vitesse effective Veff mesurée à une première vitesse maximale VF, VMO et à une seconde vitesse maximale Vmax1, Vmax2 (qui est supérieure à ladite première vitesse maximale VF, VMO), et lesdits moyens 5 indiquent qu'une inspection structurale doit être effectuée, lorsque l'une des trois conditions suivantes est réalisée :
- ladite vitesse effective Veff mesurée est inférieure à ladite première vitesse maximale VF, VMO et ledit facteur de charge vertical Nzeff mesuré est hors d'un premier domaine DA1, DA2 formé par lesdites valeurs limites supérieure et inférieure ;
- ladite vitesse effective Veff mesurée est comprise entre ladite première vitesse maximale VF, VMO et ladite seconde vitesse maximale Vmax1, Vmax2 et ledit facteur de charge Nzeff mesuré est hors d'un second domaine prédéterminé DB1, DB2 ; et
- ladite vitesse effective Veff mesurée est supérieure à ladite seconde vitesse maximale VF, VMO.

Dans le cadre de la présente invention, les vitesses maximales sont déterminées par rapport à des vitesses VFE, VMO, VLE précisées ci-dessous, qui sont obtenues de façon usuelle à l'aide de modèles de charge.

Ces vitesses VFE, VMO, VLE dépendent des configurations de vol de l'avion. Il en est de même des valeurs limites de facteur de charge vertical Nzsup1, Nzsup2, Nzinf1, Nzinf2 utilisées pour la mise en oeuvre de l'invention.

Premièrement, lorsque l'avion se trouve dans une première configuration de vol, pour laquelle des éléments hypersustentateurs sont déployés sur les ailes, on considère une vitesse VFE ("Flap Extended Speed" en anglais, c'est-à-dire "vitesse avec volets sortis") qui représente une vitesse maximale avec éléments sustentateurs déployés.

On sait que, en particulier pour améliorer les performances au décollage et à l'atterrissage, on équipe généralement la voilure des avions de tels éléments hypersustentateurs (à savoir des becs au bord d'attaque des ailes et des volets au bord de fuite) qui sont déployables et rétractables, et qui permettent d'augmenter sensiblement la portance engendrée à incidence donnée, lorsqu'ils sont déployés, et aussi de repousser le phénomène de décrochage.

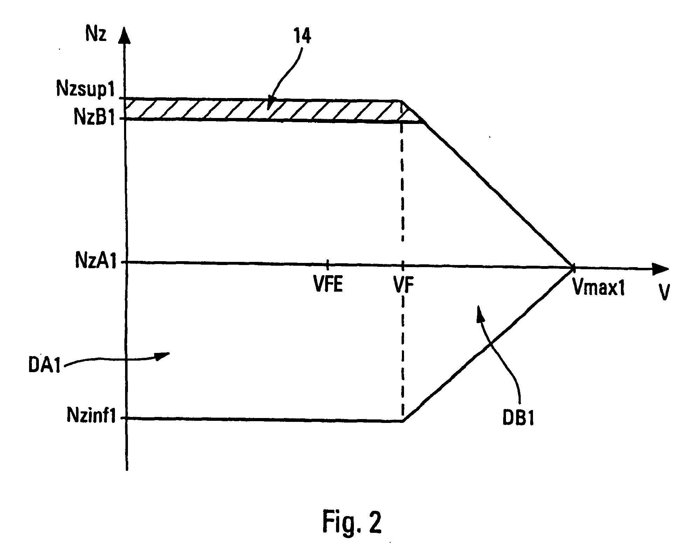

Dans ce cas, comme représenté sur la figure 2 illustrant un graphique comprenant en abscisse la vitesse (ou Mach) V de l'avion et en ordonnée le facteur de charge vertical Nz, ladite première vitesse maximale VF vérifie la relation VF = VFE + k, k étant une valeur dépendant de la position desdits éléments sustentateurs, et ladite seconde vitesse maximale Vmax1 vérifie la relation Vmax1 = VF + V1, V1 étant une valeur de vitesse prédéterminée.

Dans un mode de réalisation particulier :
- k vaut 4 noeuds (environ 2 m/s) ; et
- V1 vaut 15 noeuds (environ 7,5 m/s).

Ainsi, dans ce cas, lesdits moyens 8 comparent ledit facteur de charge vertical Nzeff mesuré à la valeur limite supérieure Nzsup1 et à la valeur limite inférieure Nzinf1, lesdits moyens 3 comparent ladite vitesse effective Veff mesurée aux première et seconde vitesses maximales VF et Vmax1, et lesdits moyens 5 concluent qu'une inspection structurale doit être effectuée, lorsque l'une des trois conditions suivantes est réalisée :
- ladite vitesse effective Veff mesurée est inférieure à ladite première vitesse maximale VF, et ledit facteur de charge vertical Nzeff mesuré est hors du premier domaine DA1 formé par lesdites valeurs limites supérieure et inférieure Nzsup1 et Nzinf1 ;
- ladite vitesse effective Veff mesurée est comprise entre lesdites première et seconde vitesses maximales VF et Vmax1, et ledit facteur de charge Nzeff mesuré est hors du second domaine DB1 de forme triangulaire, comme représenté sur la figure 2 ; et
- ladite vitesse effective Veff mesurée est supérieure à ladite seconde vitesse maximale Vmax1.

Dans un mode de réalisation particulier :
- Nzsup1 vaut 2 g, g étant l'accélération de la pesanteur ;
- NzA1 vaut 1 g ; et
- Nzinf1 vaut 0 g.

Par conséquent, lorsque l'on se trouve à l'extérieur de la zone formée par les domaines DA1 et DB1 du graphique de la figure 2, les moyens 11 préviennent un opérateur, par exemple un pilote de l'avion ou un opérateur de maintenance, qu'une inspection (ou visite de maintenance) doit être réalisée sur la partie structurale de l'avion et sur les éléments qui sont montés sur cette dernière.

Sur la figure 2, on a de plus représenté une zone marginale 14 qui est définie entre ladite valeur limite supérieure Nzsup1 et une valeur auxiliaire NzB1, par exemple 1,8 g, pour des valeurs de vitesse inférieures à la vitesse VF.

Lorsque l'avion entre dans cette zone marginale 14, le dispositif 1 émet une information correspondante, qui peut notamment être utilisée dans un but statistique par les compagnies aériennes.

Deuxièmement, lorsque l'avion se trouve dans une deuxième configuration de vol, pour laquelle les éléments sustentateurs (volets et becs) sont en position de croisière, on considère une vitesse VMO correspondant à une vitesse maximale d'utilisation ("Velocity Maximum Operating" en anglais).

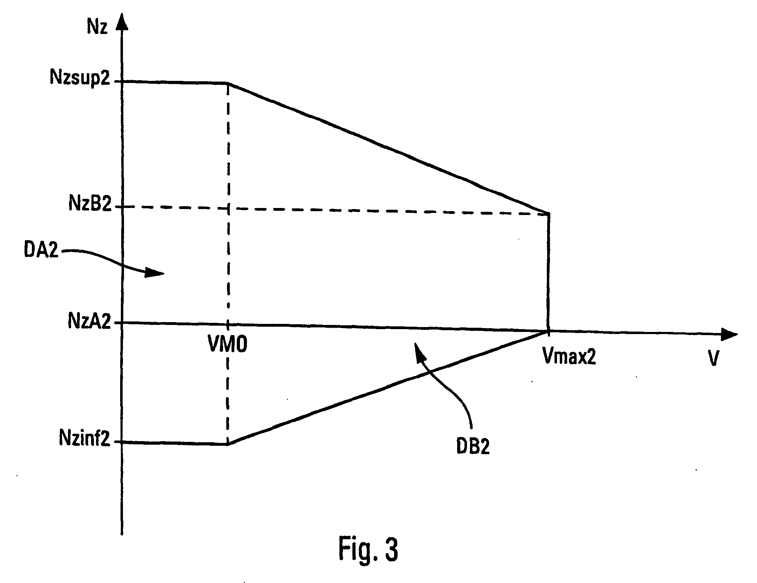

Dans ce cas qui est représenté sur la figure 3, ladite première vitesse maximale correspond à ladite vitesse maximale d'utilisation VMO, et ladite seconde vitesse maximale Vmax2 vérifie la relation Vmax2 = VMO + V2, V2 étant une valeur de vitesse prédéterminée, par exemple de 23 noeuds (environ 12 m/s).

Ainsi, dans ce cas, lesdits moyens 8 comparent ledit facteur de charge vertical Neff mesuré à la valeur limite supérieure Nzsup2 et à la valeur limite inférieure Nzinf2, lesdits moyens 3 comparent ladite vitesse effective Veff mesurée aux première et seconde vitesses maximales VMO et Vmax2, et lesdits moyens 5 concluent qu'une inspection structurale doit être effectuée, lorsque l'une des trois conditions suivantes est réalisée :
- ladite vitesse effective Veff mesurée est inférieure à ladite première vitesse maximale VMO et ledit facteur de charge vertical Nzeff mesuré est hors d'un premier domaine DA2 formé par lesdites valeurs limites supérieure et inférieure Nzsup2 et Nzinf2 ;
- ladite vitesse effective Veff mesurée est comprise entre lesdites première et seconde vitesses maximales VMO et Vmax2 et ledit facteur de charge Nzeff mesuré est hors du second domaine DB2 représenté sur la figure 3 ; et
- ladite vitesse effective Veff mesurée est supérieure à ladite seconde vitesse maximale Vmax2.

Dans un mode de réalisation particulier :
- Nzsup2 vaut 2,5 g ;
- NzB2 vaut 1 g ;
- NzA2 vaut 0 g ; et
- Nzinf2 vaut -1 g.

Par conséquent, lorsque l'on se trouve à l'extérieur de la zone noircie (domaines DA2 et DB2) du graphique de la figure 3, les moyens 11 préviennent un opérateur, par exemple un pilote de l'avion ou un opérateur de maintenance, qu'une inspection (ou visite de maintenance) doit être réalisée sur la partie structurale de l'avion et sur les éléments qui sont montés sur cette dernière.

Troisièmement, lorsque l'avion se trouve dans une troisième configuration de vol, pour laquelle le train d'atterrissage principal de l'avion est sorti, on considère une vitesse VLE correspondant à une vitesse maximale avec train d'atterrissage sorti.

Dans ce cas, l'invention est mise en oeuvre sur la base d'un graphique similaire à celui de la figure 3.

Dans un mode de réalisation particulier, ledit dispositif 1 compare ladite vitesse effective Veff mesurée à une vitesse maximale auxiliaire Vaux, par exemple VFE + 4 noeuds, VMO + 4 noeuds ou VLE + 4noeuds, et il émet un avertissement de dépassement de vitesse maximale, lorsque ladite vitesse effective Veff mesurée est supérieure à ladite vitesse maximale auxiliaire Vaux. Cet avertissement permet de prévenir l'équipage que l'avion est sorti du domaine de vol autorisé, de sorte qu'il puisse agir pour rectifier la vitesse de l'avion. Néanmoins, cette seule condition n'oblige pas la compagnie à effectuer la visite de maintenance, au contraire des solutions connues précisées ci-dessus.

Dans un mode de réalisation particulier, au moins l'un des seuils (vitesse maximale, valeur limite, ...) utilisés pour les comparaisons est adapté aux parties de structure de l'avion prises en compte (voilure, becs, ailerons, spoilers, volets, ...).

Par ailleurs, dans un mode de réalisation particulier :
- ledit dispositif 1 comporte de plus des moyens intégrés (non explicitement représentés) :
   ■ pour mesurer la valeur d'un ou plusieurs paramètres particuliers supplémentaires ; et
   ■ pour réaliser une ou des comparaisons supplémentaires, en comparant la valeur du ou desdits paramètres particuliers supplémentaires à une ou des valeurs limites correspondantes ; et
- lesdits moyens 5 sont formés pour déterminer si une inspection structurale doit être effectuée au niveau de ladite partie de structure, en tenant également compte des résultats de la ou desdites comparaisons supplémentaires.

De préférence, le dispositif 1 prend en compte, comme paramètre particulier supplémentaire, au moins l'un des paramètres suivants :
- la masse de l'avion ;
- le centrage de l'avion ;
- la pression dynamique ; et
- au moins une information particulière (par exemple une information relative à une jauge de contrainte).

## Revendications

1. Procédé pour détecter sur un avion un dépassement de charges de dimensionnement au niveau d'une partie de structure dudit avion, procédé selon lequel on réalise de façon répétitive et automatique les étapes suivantes :
- a) on mesure une vitesse effective de l'avion ;
- b) on réalise une première comparaison, en comparant cette vitesse effective mesurée à au moins une valeur de vitesse ;
- on mesure un facteur de charge vertical de l'avion ;et
- on réalise une seconde comparaison, en comparant ledit facteur de charge vertical mesuré à au moins une valeur de facteur de charge vertical ; et
- c) on détermine si une inspection structurale doit être effectuée au niveau de ladite partie de structure, en tenant compte au moins des résultats de ladite première comparaison et de ladite seconde comparaison,
**caractérisé en ce qu'**à l'étape b), on compare ledit facteur de charge vertical mesuré à des premier et second domaines de facteur de charge vertical, **en ce qu'**à l'étape b), on détermine des première et seconde vitesses maximales, à partir d'une vitesse qui dépend de la configuration de vol actuelle de l'avion, et on compare ladite vitesse effective mesurée à ces première et seconde vitesses maximales, et **en ce qu'**à l'étape c), on conclut qu'une inspection structurale doit être effectuée, lorsque l'une des trois conditions suivantes est réalisée :
- ladite vitesse effective mesurée est inférieure à ladite première vitesse maximale, et ledit facteur de charge vertical mesuré est hors dudit premier domaine (DA1, DA2)qui est formé par des valeurs limites supérieure et inférieure prédéterminées qui dépendent de la configuration de vol actuelle de l'avion ;
- ladite vitesse effective mesurée est comprise entre lesdites première et seconde vitesses maximales, et ledit facteur de charge mesuré est hors dudit second domaine (DB1, DB2)qui présente des limites supérieure et inférieure qui varient linéairement en fonction de la vitesse, ladite limite supérieure variant de ladite valeur limite supérieure à ladite première vitesse maximale jusqu'à une première valeur prédéterminée à ladite seconde vitesse maximale, et ladite limite inférieure variant de ladite valeur limite inférieure à ladite première vitesse maximale jusqu'à une seconde valeur prédéterminée à ladite seconde vitesse maximale ; et
- ladite vitesse effective mesurée est supérieure à ladite seconde vitesse maximale (Vmax1, Vmax2).

2. Procédé selon la revendication 1,
**caractérisé en ce que**, lorsque des éléments sustentateurs de la voilure de l'avion sont déployés, lesdites première et seconde vitesses maximales sont calculées à partir d'une vitesse maximale avec des éléments sustentateurs déployés VFE.

3. Procédé selon la revendication 2,
**caractérisé en ce que** ladite première vitesse maximale VF vérifie la relation VF = VFE + k, k étant une valeur dépendant de la position desdits éléments sustentateurs, et **en ce que** ladite seconde vitesse maximale Vmax 1 vérifie la relation Vmax1 = VF + V1, V1 étant une valeur de vitesse prédéterminée.

4. Procédé selon la revendication 3,
**caractérisé en ce que** la valeur k est sensiblement égale à 2 m/s et la valeur V1 est sensiblement égale à 7,5 m/s.

5. Procédé selon l'une quelconque des revendications 2 à 4,
**caractérisé en ce que** la valeur limite supérieure vaut 2g, g étant l'accélération de la pesanteur, et la valeur limite inférieure vaut 0g.

6. Procédé selon l'une quelconque des revendications 2 à 5,
**caractérisé en ce qu'**à ladite seconde vitesse maximale, lesdites limites supérieure et inférieure dudit second domaine présentent une même valeur qui vaut 1 g, g étant l'accélération de la pesanteur.

7. Procédé selon la revendication 1,
**caractérisé en ce que**, lorsque l'avion est en configuration de croisière, lesdites première et seconde vitesses maximales sont calculées à partir d'une vitesse maximale d'utilisation VMO.

8. Procédé selon la revendication 7,
**caractérisé en ce que** ladite première vitesse maximale correspond à ladite vitesse maximale d'utilisation VMO, et **en ce que** ladite seconde vitesse maximale Vmax2 vérifie la relation Vmax2 = VMO + V2, V2 étant une valeur de vitesse prédéterminée.

9. Procédé selon la revendication 8,
**caractérisé en ce que** la valeur V2 est sensiblement égale à 12 m/s.

10. Procédé selon l'une quelconque des revendications 7 à 9,
**caractérisé en ce que** la valeur limite supérieure vaut 2,5g, g étant l'accélération de la pesanteur, et la valeur limite inférieure vaut -1 g.

11. Procédé selon l'une quelconque des revendications 7 à 10,
**caractérisé en ce qu'**à ladite seconde vitesse maximale, ladite limite supérieure dudit second domaine vaut 1g et ladite limite inférieure vaut 0g, g étant l'accélération de la pesanteur.

12. Procédé selon la revendication 1,
**caractérisé en ce que**, lorsque le train d'atterrissage principal de l'avion est sorti, lesdites première et seconde vitesses maximales sont calculées à partir d'une vitesse maximale avec train d'atterrissage sorti.

13. Procédé selon l'une quelconque des revendications précédentes,
**caractérisé en ce qu'**à l'étape b), on compare ladite vitesse effective mesurée à une vitesse maximale auxiliaire, et **en ce qu'**à l'étape c), on émet un avertissement de dépassement de vitesse maximale, lorsque ladite vitesse effective mesurée est supérieure à ladite vitesse maximale auxiliaire.

14. Procédé selon l'une quelconque des revendications précédentes,
**caractérisé en ce que** ladite vitesse maximale dépend également d'au moins une caractéristique particulière de l'avion.

15. Procédé selon l'une quelconque des revendications précédentes,
**caractérisé en ce que** ledit facteur de charge vertical mesuré est filtré avant d'être comparé à au moins une valeur limite.

16. Procédé selon l'une quelconque des revendications précédentes,
**caractérisé en ce que**, à l'étape c), le résultat d'au moins une comparaison doit être confirmé pendant une durée prédéterminée avant d'être pris en compte.

17. Procédé selon l'une quelconque des revendications précédentes,
**caractérisé en ce qu'**au moins l'un des seuils utilisés pour une comparaison dépend de parties de structure de l'avion prises en compte.

18. Dispositif pour détecter sur un avion un dépassement de charges de dimensionnement au niveau d'une partie de structure dudit avion, ledit dispositif (1) comportant :
- des premiers moyens (2) pour mesurer une vitesse effective de l'avion ;
- des deuxièmes moyens (3) pour réaliser une première comparaison, en comparant cette vitesse effective mesurée à au moins une valeur de vitesse ;
- des quatrièmes moyens (7) pour mesurer un facteur de charge vertical de l'avion ;
- des cinquièmes moyens (8) pour réaliser une seconde comparaison, en comparant ledit facteur -de charge vertical mesuré à au moins une valeur de facteur de charge vertical ; et
- des troisièmes moyens (5) qui sont formés pour déterminer si une inspection structurale doit être effectuée au niveau de- ladite partie de structure, en tenant compte au moins des résultats de ladite première comparaison et de ladite seconde comparaison,
**caractérisé en ce que** :
- lesdits deuxièmes moyens (3) sont formés de manière à comparer ledit facteur de charge vertical mesuré à des premier et second domaines de facteur de charge vertical ;
- lesdits cinquièmes moyens (8) sont formés-de manière à déterminer des première et seconde vitesses maximales, à partir d'une vitesse qui dépend de la configuration de vol actuelle de l'avion, et à comparer ladite vitesse effective mesurée à ces première et seconde vitesses maximales ; et
- lesdits troisièmes moyens (5) sont formés de manière à conclure qu'une inspection structurale doit être effectuée, lorsque l'une des trois conditions suivantes est réalisée :
■ ladite vitesse effective mesurée est inférieure à ladite première vitesse maximale et ledit facteur de charge vertical mesuré est hors dudit premier domaine (DA1, DA2) qui est formé par des valeurs limites supérieure et inférieure prédéterminées qui dépendent de la configuration de vol actuelle de l'avion ;
■ ladite vitesse effective mesurée est comprise entre lesdites première et seconde vitesses maximales et ledit facteur de charge mesuré est
■ hors dudit second domaine (DB1, DB2) qui présente des limites supérieure et inférieure qui varient linéairement en fonction de la vitesse, ladite limite supérieure variant de ladite valeur limite supérieure à ladite première vitesse maximale jusqu'à une- première valeur prédéterminée à ladite seconde vitesse maximale et ladite limite inférieure variant de ladite valeur limite inférieure à -ladite première vitesse maximale jusqu'à une seconde valeur prédéterminée à ladite seconde vitesse maximale ; et
■ ladite vitesse effective mesurée est supérieure à ladite seconde vitesse maximale (Vmax1, Vmax2).

19. Dispositif selon la revendication 18,
**caractérisé en ce qu'**il comporte de plus des sixièmes moyens (11) pour indiquer à un opérateur, le cas échéant, qu'une inspection structurale doit être effectuée.

20. Avion,
**caractérisé en ce qu'**il comporte-un dispositif (1) tel que celui spécifié sous l'une quelconque des revendications 18 et 19.

## Claims

1. Process for detecting on an aircraft an overshoot of design loads at the level of a structural part of said aircraft, according to which process the following steps are carried out repetitively and automatically:
- a) an effective speed of the aircraft is measured;
- b) a first comparison is carried out, by comparing this measured effective speed with at least one speed value;
- a vertical load factor of the aircraft is measured; and
- a second comparison is carried out, by comparing said measured vertical load factor with at least one value of the vertical load factor; and
- c) one determines whether a structural inspection needs to be performed at the level of said structural part, taking into account at least the results of said first comparison and said second comparison,
**characterized in that** in step b), said measured vertical load factor is compared with first and second domains of vertical load factor, **in that** in step b), first and second maximum speeds are determined from a speed which depends on the current flight configuration of the aircraft, and said measured effective speed is compared with these first and second maximum speeds, and **in that** in step c), one concludes that a structural inspection needs to be performed, when one of the following three conditions is achieved:
- said measured effective speed is below said first maximum speed and said measured vertical load factor is outside said first domain (DA1, DA2) which is formed by predetermined upper and lower limit values which depend on the current flight configuration of the aircraft;
- said measured effective speed lies between said first and second maximum speeds and said measured load factor is outside said second domain (DB1, DB2) which exhibits upper and lower limits which vary linearly as a function of the speed,_ said upper limit varying from said upper limit value at said first maximum speed to a first predetermined value at said second maximum speed, and said lower limit varying from said lower limit value at said first maximum speed to a second predetermined value at said second maximum speed; and
- said measured effective speed is greater than said second maximum speed (Vmax1, Vmax2).

2. Process according to Claim 1,
**characterized in that**, when lift-enhancing elements of the airfoil of the aircraft are deployed, said first and second maximum speeds are calculated from a maximum speed with deployed lift-enhancing elements VFE.

3. Process according to Claim 2,
**characterized in that** said first maximum speed VF satisfies the relation VF = VFE + k, k being a value dependent on the position of said lift-enhancing elements, and **in that** said second maximum speed Vmax1 satisfies the relation Vmax1 = VF + V1, V1 being a predetermined speed value.

4. Process according to Claim 3,
**characterized in that** the value k is substantially equal to 2 m/s and the value V1 is substantially equal to 7.5 m/s.

5. Process according to any one of Claims 2 to 4,
**characterized in that** the upper limit value equals 2g, g being the acceleration due to gravity, and the lower limit value equals 0g.

6. Process according to any one of Claims 2 to 5,
**characterized in that** at said second maximum speed, said upper and lower limits of said second domain exhibit one and the same value which equals 1g, g being the acceleration due to gravity.

7. Process according to Claim 1,
**characterized in that**, when the aircraft is in a cruising configuration, said first and- second maximum speeds are calculated from a maximum speed of use VMO.

8. Process according to Claim 7,
**characterized in that** said first maximum speed corresponds to said maximum speed of use VMO, and **in that** said second maximum speed Vmax2 satisfies the relation Vmax2 = VMO + V2, V2 being a predetermined speed value.

9. Process according to Claim 8,
**characterized in that** the value V2 is substantially equal to 12 m/s.

10. Process according to any one of Claims 7 to 9,
**characterized in that** the upper limit value equals 2.5g, g being the acceleration due to gravity, and the lower limit value equals -1g.

11. Process according to any one of Claims 7 to 10,
**characterized in that** at said second maximum speed, said upper limit of said second domain equals 1g and said lower limit equals 0g, g being the acceleration due to gravity.

12. Process according to Claim 1,
**characterized in that**, when the main landing gear of the aircraft is down, said first and second maximum speeds are calculated from a maximum speed with landing gear down.

13. Process according to any one of the preceding claims,
**characterized in that** in step b), said measured effective speed is compared with an auxiliary maximum speed, and **in that** in step c), a maximum speed overshoot warning is issued when said measured effective speed is greater than said auxiliary maximum speed.

14. Process according to any one of the preceding claims,
**characterized in that** said maximum speed also depends on at least one particular characteristic of the aircraft.

15. Process according to any one of the preceding claims,
**characterized in that** said measured vertical load factor is filtered before being compared with at least one limit value.

16. Process according to any one of the preceding claims,
**characterized in that** in step c), the result of at least one comparison needs to be confirmed over a predetermined duration before being taken into account.

17. Process according to any one of the preceding claims,
**characterized in that** at least one of the thresholds used for a comparison depends on structural parts of the aircraft that are taken into account.

18. Device for detecting on an aircraft an overshoot of design loads at the level -of a structural part of said aircraft, said device (1) comprising,
- first means (2) for measuring an effective speed of the aircraft;
- second means (3) for carrying out a first comparison, by comparing this measured effective speed with at least one speed value;
- fourth means (7) for measuring a vertical load factor of the aircraft;
- fifth means (8) for carrying out a second comparison, by comparing said measured vertical load factor with at least one value of vertical load factor; and
- third means (5) which are formed for determining whether a structural inspection needs to be performed at the level of said structural part, taking into account at least the results of said first comparison and said second comparison,
**characterized in that**:
- said second means (3) are formed in such a way as to compare said vertical load factor measured with first and second vertical load factor domains;
- said fifth means (8) are formed in such a way as to determine first and second maximum speeds, on the basis of a speed which depends on the current flight configuration of the aircraft, and to compare said measured effective speed with these first and second maximum speeds; and
- said third means (5) are formed in such a way as to conclude that a structural inspection must be carried out, when one of the following three conditions is realized:
• said measured effective speed is below said first maximum speed and said measured vertical load factor is outside of said first- domain (DA1, DA2) which is formed by predetermined upper and lower limit values which depend on the current flight configuration of the aircraft ;
• said measured effective speed lies between said first and second maximum speeds and said measured load factor is outside of said second domain (DB1, DB2) which exhibits upper and lower limits which vary linearly as a function of the speed, said upper limit varying from said upper limit value at said first maximum speed to a first predetermined value at said second maximum speed and said lower limit varying from said lower limit value at said first maximum speed to a second predetermined value at said second maximum speed; and
• said measured effective speed is above said second maximum speed (Vmax1, Vmax2).

19. Device according to Claim 18,
**characterized in that** it moreover comprises sixth means (11) for indicating to an operator as appropriate, that a structural inspection needs to be performed.

20. aircraft,
**characterized in that** it comprises a device (1) such as that specified under either of Claims 18 and 19.

## Patentansprüche

1. Verfahren, um an einem Flugzeug ein Überschreiten der Belastungsgrenzen eines Strukturteils des Flugzeugs zu ermitteln, wobei gemäß dem Verfahren die folgenden Schritte wiederholt und automatisch durchgeführt werden:
- a) eine Istgeschwindigkeit des Flugzeugs wird gemessen;
- b) ein erster Vergleich wird durchgeführt, indem diese gemessene Istgeschwindigkeit mit mindestens einem Geschwindigkeitswert verglichen wird;
- ein vertikales Lastvielfaches des Flugzeugs wird gemessen und
- ein zweiter Vergleich wird durchgeführt, indem das gemessene vertikale Lastvielfache mit mindestens einem Wert des vertikalen Lastvielfachen verglichen wird und
- c) es wird bestimmt, ob zumindest unter Berücksichtigung der Ergebnisse des ersten und des zweiten Vergleichs eine Strukturinspektion des Strukturteils durchgeführt werden muss,
**dadurch gekennzeichnet, dass** in Schritt b) das gemessene vertikale Lastvielfache mit einem ersten und einem zweiten Bereich des vertikalen Lastvielfachen verglichen wird, dass in Schritt b) ausgehend von einer Geschwindigkeit, die von der aktuellen Flugkonfiguration des Flugzeugs abhängig ist, eine erste und eine zweite Maximalgeschwindigkeit bestimmt werden und die gemessene Istgeschwindigkeit mit dieser ersten und zweiten Maximalgeschwindigkeit verglichen wird und **dadurch**, dass in Schritt c) darauf geschlossen wird, dass eine Strukturinspektion durchgeführt werden muss, wenn eine der drei folgenden Bedingungen erfüllt ist:
- die gemessene Istgeschwindigkeit ist kleiner als die erste Maximalgeschwindigkeit und das gemessene vertikale Lastvielfache liegt außerhalb des ersten Bereichs (DA1, DA2), der durch vorgegebene obere und untere Grenzwerte gebildet wird, die von der aktuellen Flugkonfiguration des Flugzeugs abhängig sind;
- die gemessene Istgeschwindigkeit liegt im Bereich zwischen der ersten und zweiten Maximalgeschwindigkeit und das gemessene Lastvielfache liegt außerhalb des zweiten Bereichs (DB1, DB2), der Ober- und Untergrenzen aufweist, die in Abhängigkeit von der Geschwindigkeit linear variieren, wobei der obere Grenzwert von dem oberen Grenzwert bei der ersten Maximalgeschwindigkeit bis zu einem ersten vorgegebenen Wert bei der zweiten Maximalgeschwindigkeit variiert und der untere Grenzwert von dem unteren Grenzwert bei der ersten Maximalgeschwindigkeit bis zu einem zweiten vorbestimmten Wert bei der zweiten Maximalgeschwindigkeit variiert und
- die gemessene Istgeschwindigkeit ist größer als die zweite Maximalgeschwindigkeit (Vmax1, Vmax2).

2. Verfahren nach Anspruch 1, **dadurch gekennzeichnet, dass**, wenn Auftriebselemente des Flugzeugtragwerks ausgefahren sind, die erste und zweite Maximalgeschwindigkeit ausgehend von einer Maximalgeschwindigkeit bei ausgefahrenen Auftriebselementen berechnet wird.

3. Verfahren nach Anspruch 2,
**dadurch gekennzeichnet, dass** die erste Maximalgeschwindigkeit VF die Beziehung VF=VFE+k erfüllt, wobei k ein Wert ist, der von der Position der Auftriebselemente abhängig ist und **dadurch**, dass die zweite Maximalgeschwindigkeit Vmax1 die Beziehung Vmax1 = VF+V1 erfüllt, wobei V1 ein vorgegebener Geschwindigkeitswert ist.

4. Verfahren nach Anspruch 3,
**dadurch gekennzeichnet, dass** der Wert k ungefähr 2 m/s beträgt und der Wert V1 ungefähr 7,5 m/s.

5. Verfahren nach einem der Ansprüche 2 bis 4, **dadurch gekennzeichnet, dass** der obere Grenzwert 2 g ist, wobei g die Erdbeschleunigung ist, und dass der untere Grenzwert 0 g ist.

6. Verfahren nach einem der Ansprüche 2 bis 5,
**dadurch gekennzeichnet, dass** bei der zweiten Maximalgeschwindigkeit die Ober- und Untergrenzen des zweiten Bereichs einen gleichen Wert aufweisen, der 1 g beträgt, wobei g die Erdbeschleunigung ist.

7. Verfahren nach Anspruch 1,
**dadurch gekennzeichnet, dass**, wenn das Flugzeug für den Reiseflug konfiguriert ist, die erste und zweite Maximalgeschwindigkeit ausgehend von einer höchstzulässigen Betriebsgeschwindigkeit VMO berechnet wird.

8. Verfahren nach Anspruch 7,
**dadurch gekennzeichnet, dass** die erste Maximalgeschwindigkeit der höchstzulässigen Betriebsgeschwindigkeit VMO entspricht und **dadurch**, dass die zweite Maximalgeschwindigkeit Vmax2 die Beziehung Vmax2=VMO+V2 erfüllt, wobei V2 ein vorgegebener Geschwindigkeitswert ist.

9. Verfahren nach Anspruch 8,
**dadurch gekennzeichnet, dass** der Wert V2 ungefähr 12 m/s beträgt.

10. Verfahren nach einem der Ansprüche 7 bis 9, **dadurch gekennzeichnet, dass** der obere Grenzwert 2,5 g beträgt, wobei g die Erdbeschleunigung ist, und dass der untere Grenzwert -1 g beträgt.

11. Verfahren nach einem der Ansprüche 7 bis 10, **dadurch gekennzeichnet, dass** bei der zweiten Maximalgeschwindigkeit der obere Grenzwert des zweiten Bereichs 1 g beträgt und der untere Grenzwert 0 g, wobei g die Erdbeschleunigung ist.

12. Verfahren nach Anspruch 1,
**dadurch gekennzeichnet, dass**, wenn das Hauptlandefahrwerk des Flugzeugs ausgefahren ist, die erste und zweite Maximalgeschwindigkeit ausgehend von einer Maximalgeschwindigkeit bei ausgefahrenem Landefahrwerk berechnet wird.

13. Verfahren nach einem der vorhergehenden Ansprüche,
**dadurch gekennzeichnet, dass** in Schritt b) die gemessene Istgeschwindigkeit mit einer Hilfsmaximalgeschwindigkeit verglichen wird, und **dadurch**, dass in Schritt c) eine Warnung des Überschreitens der Maximalgeschwindigkeit abgegeben wird, wenn die gemessene Istgeschwindigkeit größer ist als die Hitfsmaximatgeschwindigkeit.

14. Verfahren nach einem der vorhergehenden Ansprüche, **dadurch gekennzeichnet, dass** die Maximalgeschwindigkeit außerdem von mindestens einem besonderen Merkmal des Flugzeugs abhängig ist.

15. Verfahren nach einem der vorhergehenden Ansprüche,
**dadurch gekennzeichnet, dass** das gemessene vertikale Lastvielfache gefiltert wird, bevor es mit mindestens einem Grenzwert verglichen wird.

16. Verfahren nach einem der vorhergehenden Ansprüche, **dadurch gekennzeichnet, dass** in Schritt c) das Ergebnis mindestens eines Vergleichs während einer vorbestimmten Zeitdauer bestätigt werden muss, bevor es berücksichtigt wird.

17. Verfahren nach einem der vorhergehenden Ansprüche, **dadurch gekennzeichnet, dass** mindestens einer der für einen Vergleich verwendeten Schwellenwerte von berücksichtigten Strukturteilen des Flugzeugs abhängig ist.

18. Vorrichtung, um an einem Flugzeug ein Überschreiten der Belastungsgrenzen eines Strukturteils des Flugzeugs zu ermitteln, wobei die Vorrichtung (1) umfasst:
- erste Mittel (2) zur Messung einer Istgeschwindigkeit des Flugzeugs;
- zweite Mittel (3) zum Durchführen eines ersten Vergleichs, indem diese gemessene Istgeschwindigkeit mit mindestens einem Geschwindigkeitswert verglichen wird;
- vierte Mittel (7) zur Messung eines vertikalen Lastvielfachen des Flugzeugs
- fünfte Mittel (8) zum Durchführen eines zweiten Vergleichs, indem das gemessene vertikale Lastvielfache mit mindestens einem Wert des vertikalen Lastvielfachen verglichen wird und
- dritte Mittel (5), die dazu ausgebildet sind, zu bestimmen, ob zumindest unter Berücksichtigung der Ergebnisse des ersten und des zweiten Vergleichs eine Strukturinspektion des Strukturteils durchgeführt werden muss,
**dadurch gekennzeichnet, dass**:
- die zweiten Mittel (3) derart ausgebildet sind, dass sie das gemessene vertikale Lastvielfache mit einem ersten und einem zweiten Bereich des vertikalen Lastvielfachen vergleichen;
- die fünften Mittel (8) derart ausgebildet sind, dass sie die erste und zweite Maximalgeschwindigkeit ausgehend von einer Geschwindigkeit bestimmen, die von der aktuellen Flugkonfiguration des Flugzeugs abhängig ist und dass sie die gemessene Istgeschwindigkeit mit dieser ersten und zweiten Maximalgeschwindigkeit vergleichen und
- die dritten Mittel (5) derart ausgebildet sind, dass sie darauf schließen, dass eine Strukturinspektion durchgeführt werden muss, wenn eine der drei folgenden Bedingungen erfüllt ist:
■ die gemessene Istgeschwindigkeit ist kleiner als die erste Maximalgeschwindigkeit und das gemessene vertikale Lastvielfache liegt außerhalb des ersten Bereichs (DA1, DA2), der durch vorgegebene obere und untere Grenzwerte gebildet wird, die von der aktuellen Flugkonfiguration des Flugzeugs abhängig sind;
■ die gemessene Istgeschwindigkeit liegt im Bereich zwischen der ersten und zweiten Maximalgeschwindigkeit und das gemessene Lastvielfache liegt außerhalb des zweiten Bereichs (DB1, DB2), der Ober- und Untergrenzen aufweist, die in Abhängigkeit von der Geschwindigkeit linear variieren, wobei der obere Grenzwert von dem oberen Grenzwert bei der ersten Maximalgeschwindigkeit bis zu einem ersten vorgegebenen Wert bei der zweiten Maximalgeschwindigkeit variiert und der untere Grenzwert von dem unteren Grenzwert bei der ersten Maximalgeschwindigkeit bis zu einem zweiten vorbestimmten Wert bei der zweiten Maximalgeschwindigkeit variiert und
■ die gemessene Istgeschwindigkeit ist größer als die zweite Maximalgeschwindigkeit (Vmax1, Vmax2).

19. Vorrichtung nach Anspruch 18,
**dadurch gekennzeichnet, dass** sie außerdem sechste Mittel (11) umfasst, die dazu vorgesehen sind, einer Bedienperson gegebenenfalls anzuzeigen, dass eine Strukturinspektion durchgeführt werden muss.

20. Flugzeug,
**dadurch gekennzeichnet, dass** es eine Vorrichtung (1) wie die unter einem der Ansprüche 18 und 19 spezifizierte aufweist.
